# FASCICULE DE BREVET EUROPEEN

(11) **EP 1 261 842 B1**
(45) Date de publication et mention de la délivrance du brevet: **12.04.2006**
(21) Numéro de dépôt: 01907840.1
(22) Date de dépôt: 19.02.2001
(51) Int. Cl.: G01C 15/00, G01S 17/89, G01S 5/16

(54) **EQUIPEMENT DE TELEMETRIE POUR LA CARTOGRAPHIE BI- OU TRI-DIMENSIONNELLE D'UN VOLUME**
ENTFERNUNGSMESSGERÄT ZUR KARTIERUNG EINES ZWEI- ODER DREIDIMENSIONALEN VOLUMENS
TELEMETRIC EQUIPMENT FOR TWO-DIMENSIONAL OR THREE-DIMENSIONAL CARTOGRAPHY OF A VOLUME

(30) Priorité: 18.02.2000 FR 0002038
(43) Date de publication de la demande: 04.12.2002
(73) Titulaire: SCERTAB - Société Civile d'Etudes et de Recherches en Télémétrie Appliquée au Batiment, 75014 Paris (FR)
(72) Inventeur: CORNIL, Yan, F-83400 Hyères (FR)
(74) Mandataire: Breese, Pierre
(86) Numéro de dépôt international: PCT/FR2001/000482
(87) Numéro de publication internationale: WO 2001/061278

(56) Documents cités:
- US-A- 5 247 487
- US-A- 5 337 149

## Description

La présente invention concerne le domaine de la télémétrie et de la cartographie bi- ou tridimensionnelle.

Les relevés de plan ou l'acquisition du volume d'un espace architectural ou industriel sont généralement effectués par des géomètres par relevés successifs et traçage de plans à partir des ces relevés.

Le relevé d'intérieur rencontre plusieurs obstacles :

S'il n'est fait que manuellement, il est lent et cher car un tel relevé doit être réalisé par un personnel qualifié, généralement un géomètre.

S'il est fait automatiquement par un appareil, il est également lent parce que l'appareil va devoir enregistrer un nombre de données considérable (télémètre laser à relevé angulaire fin) dont le traitement par ordinateur peut prendre plusieurs heures.

Une fois l'acquisition des points effectuée, il est nécessaire de procéder à une construction informatique de l'image et à un traitement de l'image obtenue qui sera lent (technique photogrammétrique), complexe et en fait peu fiable en raison de la difficulté d'interprétation automatique des résultats.

De plus si ces mesures sont faites par un appareil, il faut situer cet appareil dans un référentiel absolu de manière à rassembler les mesures. La technique utilisée par les théodolites motorisés comme la technique du double relevé selon laquelle le théodolite relève sa propre position d'une mesure à l'autre est précise mais lente.

Les télémètres habituellement utilisés sont des télémètres à temps de vol qui présentent une précision d'environ 3 cm (1 cm en moyenne sur plusieurs mesures) qui n'est pas compatible avec la précision demandée en relevé d'intérieur.

Le brevet français FR2630539 a pour objet des procédés pour effectuer des levés de métrés d'enveloppe constituée de surfaces planes en utilisant un télémètre à faisceau laser. Le procédé de l'art antérieur consiste à créer un matériel pour le relevé intérieur, pour la mesure de métrés sur courte distance à l'intérieur de bâtiment et de l'associer à un programme de conception assisté par ordinateur, de façon à reproduire les enveloppes et les éléments constitutifs d'une pièce sous toute forme souhaitée. Pour cela, on effectue avec le télémètre les mesures des coordonnées polaires de nuage de points quelconques P, pris sur chaque surface, constituant l'enveloppe à partir de la même station S1. On calcule alors la position de chaque plan, sphère, tore, cylindre ou autre surface simple puis l'intersection de tous les surfaces pris deux à deux pour définir les arêtes du volume considéré.

Un tel procédé est délicat à mettre en oeuvre en raison de son automatisation totale, impliquant la prise en compte de toutes les situations géométriques susceptibles d'être rencontrées sur le terrain, et la mise en oeuvre de traitements informatiques élaborés.

On connaît également le brevet US5337149 décrivant un équipement permettant de créer un modèle informatique d'un objet tridimensionnel de grandes dimensions à mesure que les données sont acquises. Cet équipement de l'art antérieur comprend un dispositif de mesure, un ordinateur contenant un programme de dessin assisté par ordinateur, un dispositif de transmission de données, et un écran de visualisation. Le dispositif de mesure de distance prélève des mesures à partir d'un emplacement stable et pouvant être déplacé. L'emplacement de points mesurés est calculé en fonction de la distance du point mesuré et de l'orientation du dispositif de mesure. L'appareil et le procédé fonctionnent de façon que l'utilisateur soit connecté avec le programme de dessin assisté par ordinateur et utilise le dispositif de mesure comme un dispositif d'entrée pour introduire des données dans le programme. Ainsi, l'utilisateur peut créer un modèle complet de l'objet uniquement en prenant des mesures physiques d'un objet ou d'un espace sans aucune limitation de mouvement autour de l'objet ou de l'espace, ou à travers ledit espace. Ce document de l'art antérieur décrit une variante portative comprenant une centrale inertielle.

Un tel équipement n'est utilisable que dans un espace continu, et ne permet pas de procéder à l'acquisition de volumes irréguliers comportant des zones masquées, par exemple un appartement comportant plusieurs pièces séparées par des portes. Par ailleurs, la variante à boîtier portatif ne fournit qu'un signal différentiel, dont l'exploitation requiert des moyens de calculs puissants et de fréquents recalibrages.

On connaît également le brevet américain US5247487 décrivant un système de prise de mesures dans l'espace déterminant la position, l'orientation, la forme et/ou les caractéristiques opérationnelles d'un environnement. Le système comprend un appareil générateur de données et un appareil de modélisation. Les données générées peuvent être ensuite transformées en un modèle de CDAO (conception et dessins assistés par ordinateur) d'un environnement existant ou construit, ou utilisés d'une autre manière pour obtenir une topographie tridimensionnelle de l'environnement.

Ce système fait appel à une pluralité de balises positionnées dans la pièce à analyser.

La présente invention vise à remédier aux inconvénients de l'art antérieur en proposant une solution permettant de réduire sensiblement le temps d'acquisition des informations utiles. L'invention porte à cet effet sur un procédé et un équipement permettant d'associer l'homme et la machine de manière à ne mesurer que ce qui est nécessaire, en réduisant au minimum les interventions manuelles et en optimisant les fonctions automatisables. L'invention comprend un équipement défini dans la revendication 1, et un procédé défini dans la revendication 8. Dans son acception la plus générale, l'invention concerne un équipement de télémétrie pour la cartographie bi - ou tri-dimensionnelle d'un volume, ledit équipement comportant une tête de télémesure et un moyen d'acquisition de la position de ladite tête de mesure dans un référentiel fixe. L'équipement comprend en outre un boîtier portatif autonome comportant la tête télémétrique et un boîtier fixe, les deux boîtiers comportant des moyens pour l'acquisition à distance de la position et de l'orientation du boîtier portatif dans ledit référentiel fixe.

L'invention est donc composée de deux moyens complémentaires :
Une station fixe, définissant un point de référence dans l'espace à cartographier.
Un équipement mobile facilement manipulable et déplaçable dans des recoins, pour la mesure télémétrique.

La station fixe établit la position du boîtier mobile dans son référentiel fixe. Le boîtier mobile acquiert la position d'un point de l'espace par rapport à son référentiel mobile.

L'équipement exploite ces deux informations pour recalculer les données fournies par le boîtier mobile dans le référentiel fixe.

Le boîtier fixe comporte des moyens pour déterminer les coordonnées du boîtier mobile dans ledit référentiel fixe R_{c}, ainsi qu'une base de données dans laquelle sont enregistrées les séries de données comportant au moins, pour chaque acquisition aᵢ, la distance mesurée D(aᵢ), l'orientation O(aᵢ) du boîtier mobile au moment de l'acquisition, et les coordonnées C(aᵢ) du boîtier mobile..

Avantageusement, l'équipement comporte au moins deux capteurs solidaires du référentiel fixe R_{c} délivrant un signal électrique fonction de la position du référentiel du boîtier mobile dans le référentiel fixe R_{c}.

Avantageusement, le boîtier mobile présente au moins un récepteur radiofréquence, l'équipement comportant des moyens de localisation dudit émetteur dans le référentiel fixe.

Selon un mode de réalisation préféré, la tête télémétrique comporte un ou plusieurs lasers dont au moins émet rayonnement visible.

Selon une variante pour la cartographie de volumes irréguliers comportant des cloisonnements partiels, le procédé comporte une étape consistant à placer l'équipement fixe dans une partie commune à deux volumes adjacents.

Selon une autre variante, il comporte une étape consistant à placer dans une partie commune à deux volumes adjacents un marqueur, et à procéder à l'acquisition d'un point au moins de ce marqueur depuis un premier espace pour enregistrer les coordonnées C₁(P_{c}) de ce point par rapport à un référentiel R₁ spécifique dudit premier espace, à enregistrer les coordonnées de ce même point par une acquisition depuis un deuxième espace pour enregistrer les coordonnées C₂(P_{c}) dans le référentiel R₂ et à calculer une matrice de transformation de façon à ce que la transformée de C₁(P_{c} ) correspond à C₂(P_{c}), en vue de permettre la fusion de la base B₁ des points acquis dans le premier espace et de la transformation de la base B₂ des points acquis dans le deuxième espace.

Selon une autre variante, le procédé comporte une étape d'enregistrement d'au moins un élément commun à deux espaces séparés, à enregistrer une première base B₁ de coordonnées des points d'acquisition du premier espace par rapport à un référentiel R₁ spécifique dudit premier espace, cette base B₁ comprenant les coordonnées C₁(P_{c}) dans le référentiel R₁ d'un point commun P_{c} au moins, à enregistrer une deuxième base B₂ de coordonnées des points d'acquisition du deuxième espace par rapport à un référentiel R₂ spécifique dudit deuxième espace, cette base B₂ comprenant les coordonnées C₂(P_{c}) du point commun P_{c} dans le référentiel R₂ et à appliquer à l'une desdites bases une matrice de transformation de façon à ce que la transformée de C₁(P_{c}) correspond à C₂(P_{c}), en vue de permettre la fusion de la base B₁ et de la transformation de la base B₂.

L'invention sera mieux comprise à la lecture de la description qui suit, faisant référence aux dessins annexés où :

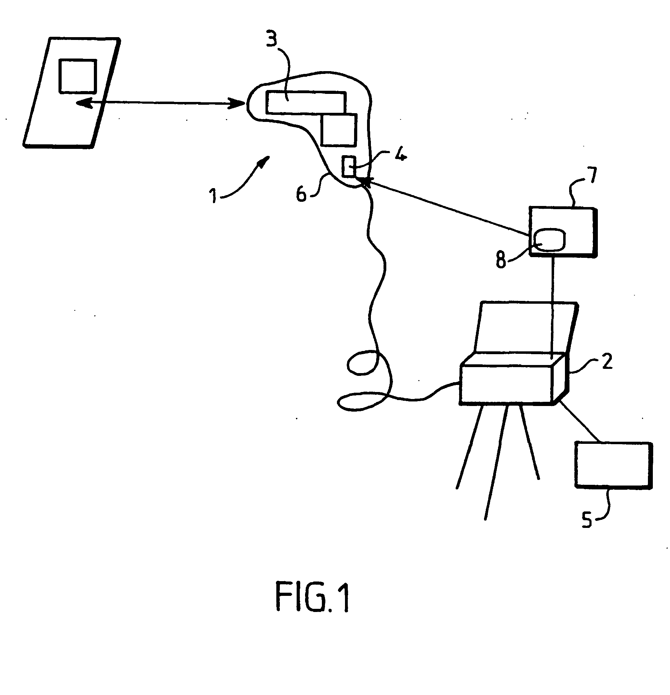

- La figure 1 représente une vue schématique d'un exemple de réalisation d'un équipement selon l'invention ;
- La figure 2 représente une vue schématique d'un exemple de réalisation d'un équipement selon une variante de réalisation l'invention ;
- les figures 3 et 4 représentent des vues schématiques de deux variantes de réalisation.

L'équipement selon l'invention comporte .
- un outil portatif de pointage (1) comportant un télémètre à balayage manuel.
- Une mallette (2) comprenant un ordinateur portable (5), un système d'alimentation à double batterie et un système de positionnement.
- un boîtier électronique (7) muni d'un écran de visualisation (8) accroché à la ceinture de l'opérateur.

Le télémètre se présente sous la forme d'un outil portatif de pointage (1) dont la position et la direction de pointage sont repérées par un équipement fixe (2). Le télémètre laser (à temps de vol, à balayage de fréquence, à balayage de phase ou à battement de fréquences) mesure la distance de l'objet visé.

Un calculateur (5) est commandé par un logiciel assurant les fonctions telles que : la reconstruction de surfaces simples et leur assemblage de manière quasi automatique, la fusion d'objets avec une interface type logiciel d'architecture afin de fournir des plans 2D/3D et des fichiers compatibles de type AUTO CAD (nom commercial) .

L'équipement comprend optionnellement une projection dite tête haute.

L'outil portatif de pointage (1) présente une poignée (6) supportant un télémètre laser (3) et un système de positionnement (4).

Le boîtier (7) est relié à :
- l'outil portatif de pointage (1) par une fibre optique ,
- la mallette (2) par un système filaire ou par une communication radio.

Le laser est un laser visible et de classe 2 (sécurité oculaire), présentant une vitesse d'acquisition d'environ 100Hz et une précision de la mesure de l'ordre du millimètre.

La portée est comprise entre 0.1 et 10 m, avec des gammes additionnelles, par exemple 10-20m ou 20-30m)

Le système (4) de positionnement et d'orientation dans l'espace comprend un ou plusieurs capteurs magnétiques. On peut détecter une erreur sur la qualité du champ magnétique (courbure de champ) en utilisant deux capteurs. Dans la variante comportant deux capteurs magnétiques solidaires de la poignée par exemple, on peut en permanence calculer la distance les séparant (à partir des mesures faites) et comparer la distance calculée à partir des signaux délivrés par les deux capteurs à la distance réelle déterminée en usine. Un circuit de comparaison délivre un signal si la différence entre la distance mesurée et la distance calculée dépasse une valeur seuil prédéterminée.

La même opération peut être réalisée en comparant les valeurs d'angles données par chaque capteur magnétique de manière à déclencher une alarme en cas de discordance entre les deux capteurs.

De même on peut se servir de la lecture des positions de chaque capteur pour recalculer la direction de pointage.

En cas d'alarme, l'opérateur pourra recommencer sa mesure, soit en s'approchant de l'antenne, soit en s'éloignant d'une masse métallique proche.

Le système de positionnement fournit une information sur le positionnement et l'orientation du télémètre par une mesure par rapport à un autre référentiel. La méthode de positionnement est soit basée sur une technique magnétique ou acoustique à partir d'une antenne émettrice, soit basée sur une technique d'onde radio ou optique par triangulation à partir de plusieurs balises émettant à des fréquences différentes.

Ce système de mesure donne la position et l'orientation du référentiel lié à T par rapport à l'antenne point A.

Un logiciel permettra de déduire les coordonnées spatiales de O par rapport à A. Il permettra également de traiter des nuages de points de manière à en extraire la position de plan ou d'autres objets plus complexes (colonne, moulure...). Des techniques de fusion d'objets permettront de reconstituer l'ensemble d'un immeuble.

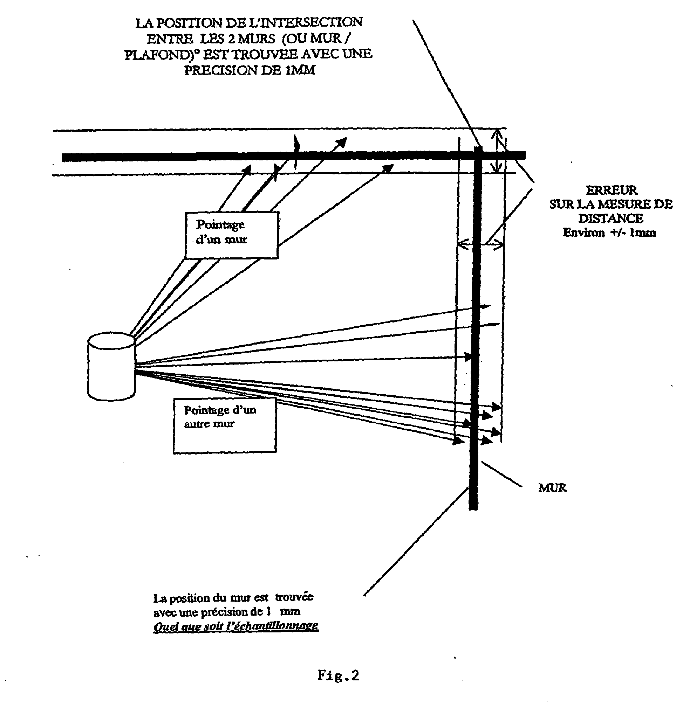

L'utilisation de l'équipement selon l'invention est décrite dans ce qui suit en référence à la figure 2.

L'utilisateur rentre dans une pièce avec l'outil, place la mallette à peu près au milieu de la pièce sur une table, sinon sur le sol.

Il ouvre ensuite la mallette et réactive l'ordinateur.

Il procède à l'initialisation d'une séquence en indiquant à l'ordinateur qu'il commence l'acquisition d'une nouvelle pièce.

Il commence à relever la position d'un mur en le balayant avec son faisceau laser visible : un bouton sur la poignée lui permet d'indiquer à l'ordinateur quand enregistrer les mesures.

Il pointe le faisceau laser successivement sur tous les murs, plafond, sol, piliers etc.

Il vérifie son travail en temps réel en observant la pièce se dessiner automatiquement sur l'écran qu'il porte à la ceinture.

Il indique à l'ordinateur en cliquant sur l'icône correspondante le type d'objet qu'il souhaite mesurer et mettre en place dans la pièce (porte, fenêtre, prise, plinthe...)

Ensuite l'opérateur pourra pointer certaines zones sur lesquelles il souhaite relever des détails fins (frises, reliefs, moulures, chambranles...)

Il repère par ailleurs à l'écran le ou les objets communs à deux mesures de pièces successives (porte, mur...) permettant la fusion ultérieure des pièces.

L'utilisateur rapporte d'autres informations provenant d'un autre moyen de mesure (mètre ruban, pied à coulisse) et rentre éventuellement des informations complémentaires : l'état des surfaces, le nombre de bureaux, placards....

En cas de parties cachées, il mesure la pièce sous un angle différent et fusionne la pièce mesurée avec le projet en cours.

L'équipement selon l'invention pourra également être utilisé pour faire un relevé extérieur (relevé de façade). De même, il pourra être utilisé dans certaines applications industrielles : relevé de formes pour contrôle, et d'autres applications.

Une fois que l'appareil aura relevé la position d'un point, avec la précision qui lui est attachée, le logiciel pourra calculer le meilleur plan (ou le meilleur cylindre pour un pilier) passant par ces points. De par la nature de la mesure, la précision sur la position du plan et d'autant meilleure que le nombre de points de mesure est grand. Il varie comme √N, si N est le nombre de mesures pour un plan. La précision sur la position d'un angle est donc directement liée à √N.

Si par exemple le système de mesure relève 100 points d'un plan avec une précision de 1 cm, la position de ce plan sera donc connue avec une précision de 1 cm √100 = 1 mm.

La précision sur la position de l'angle du mur (même en partie cachée) sera de 1mm.

Le procédé de télémétrie selon l'invention nécessite de mesurer un certain nombre de points par pièce que l'on peut lister comme suit.
- Une dizaine de points par plan au moins
- Deux points pour une porte (diagonale)
- Deux points pour une fenêtre (diagonale)

Les portes seront calibrées au départ. L'utilisateur mesurera précisément une (ou les) porte-type du bâtiment pour la situer ensuite uniquement par sa diagonale. Il en est de même pour les fenêtres ou les piliers par exemple.

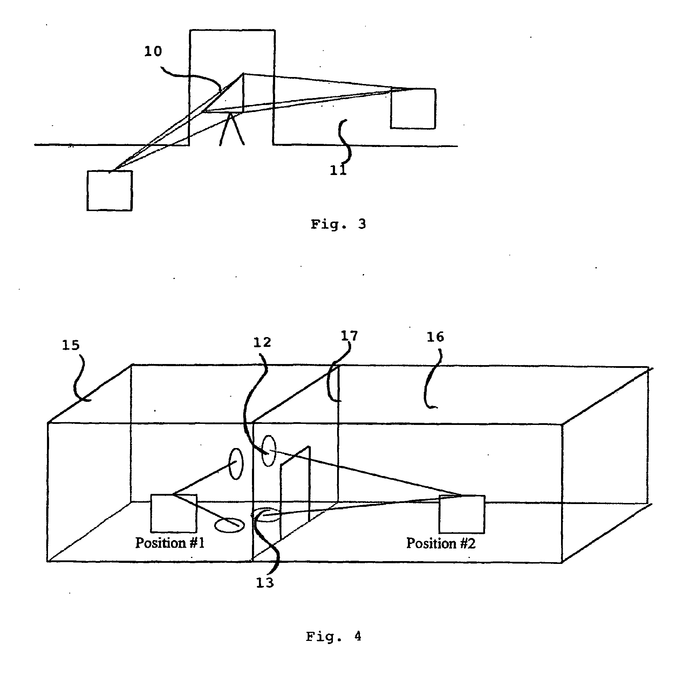

La figure 3 représente une variante de réalisation pour la cartographie d'espaces irréguliers, comportant des volumes partiellement séparés par des cloisons.

Un marqueur (10) est placé dans une partie commune aux deux espaces séparés par une cloison (11). On procède à l'acquisition des coordonnées de points de ce marqueur respectivement depuis un premier espace et depuis un deuxième espace. On enregistre les données d'acquisition dans deux bases distinctes contenant par ailleurs les données relatives aux acquisitions dans l'espace correspondant.

La fusion de ces deux bases peut être réalisée après recalibrage des bases, par l'application d'une matrice de transformation déterminée avec que les coordonnées des points du marqueurs se recouvrent après application de la matrice de transformation. Ceci permet de procéder à des cartographies de volumes qui comportent des zones qui ne sont pas visibles depuis un point commun.

La figure 4 illustre une autre méthode, consistant à procéder à l'acquisition de quelques points (12, 13) commun (par exemple des portes, fenêtres ou murs) ou de paires d'éléments dont on connaît la position relative. On procède à la cartographie des deux volumes (15, 16) séparés par une cloison (17).

On calcule ensuite une matrice de transformation pour permettre la fusion des deux bases cartographiques.

L'invention est décrite dans ce qui précède à titre d'exemple non limitatif. L'homme du métier sera à même de proposer diverses variantes sans pour autant sortir du cadre de l'invention.

## Revendications

1. Equipement de télémétrie pour la cartographie bi - ou tri-dimensionnelle d'un volume, ledit équipement comportant une tête de télémesure et un moyen d'acquisition de la position de ladite tête de mesure dans un référentiel fixe, l'équipement étant constitué par un boîtier portatif autonome comprenant une tête télémétrique et un boîtier fixe, les deux boîtiers comportant des moyens pour l'acquisition à distance de la position et de l'orientation du boîtier portatif dans ledit référentiel fixe, **caractérisé en ce qu'**il comporte au moins deux capteurs, un premier capteur mesurant une distance, un deuxième capteur, lié au boîtier portatif, mesurant une position et une direction, **en ce que** le boîtier fixe établit la position du boîtier mobile dans son référentiel fixe et le boîtier mobile acquiert la position d'un point de l'espace par rapport à son référentiel mobile, l'équipement exploitant ces deux informations pour recalculer les données fournies par le boîtier mobile dans le référentiel fixe, l'équipement étant en outre **caractérisé en ce que** ledit boîtier mobile présente au moins un émetteur radio-fréquence et **en ce que** l'équipement comporte des moyens de localisation dudit émetteur dans le référentiel fixe.

2. Equipement de télémétrie pour la cartographie bi - ou tri-dimensionnelle d'un volume, selon la revendication 1, **caractérisé en ce que** le boîtier fixe comporte des moyens pour déterminer les coordonnées du boîtier mobile dans ledit référentiel fixe R_{c}, ainsi qu'une base de données dans laquelle sont enregistrées les séries de données comportant au moins, pour chaque acquisition aᵢ, la distance mesurée D(aᵢ), l'orientation O(aᵢ) du boîtier mobile au moment de l'acquisition, et les coordonnées C(aᵢ) du boîtier mobile.

3. Equipement de télémétrie pour la cartographie bi - ou tri-dimensionnelle d'un volume, selon la revendication 1 ou 2, **caractérisé en ce qu'**il comporte un ou deux capteurs solidaires du référentiel fixe R_{c} délivrant un signal électrique fonction de la position du référentiel du boîtier mobile dans le référentiel fixe R_{c}.

4. Equipement de télémétrie pour la cartographie bi - ou tri-dimensionnelle d'un volume selon la revendication 1, **caractérisé en ce que** le deuxième capteur délivre trois coordonnées et trois angles.

5. Equipement de télémétrie pour la cartographie bi - ou tri-dimensionnelle d'un volume selon la revendication 1, **caractérisé en ce qu'**un troisième capteur, lié au boîtier fixe, effectue la mesure de la distance entre le troisième capteur et le deuxième capteur, et **en ce que** le troisième capteur comprend des moyens pour générer un signal d'alarme en cas de dérive.

6. Equipement de télémétrie pour la cartographie bi - ou tri-dimensionnelle d'un volume selon l'une quelconque des revendications précédentes, **caractérisé en ce que** la tête télémétrique comporte un laser émettant dans le rayonnement visible.

7. Equipement de télémétrie pour la cartographie bi - ou tri-dimensionnelle d'un volume selon l'une quelconque des revendications précédentes, **caractérisé en ce qu'**il comprend une mémoire contenant une bibliothèque d'objets.

8. Procédé de télémétrie pour la cartographie bi - ou tri-dimensionnelle d'un volume comportant une étape d'acquisition à distance de la position et de l'orientation d'un télémètre laser, formant boîtier portatif, dans ledit référentiel fixe, formant boîtier fixe, **caractérisé en ce que** l'étape d'acquisition à distance de la position et de l'orientation est réalisée par un pointage manuel d'un outil portatif (1) comportant notamment un capteur (3), émettant un faisceau laser visible, effectuant la mesure de la distance entre l'outil portatif et le boîtier fixe, **en ce que** le boîtier fixe établit la position du boîtier mobile dans son référentiel fixe et le boîtier mobile acquiert la position d'un point de l'espace par rapport à son référentiel mobile, l'équipement exploitant ces deux informations pour recalculer les données fournies par le boîtier mobile dans le référentiel fixe.

9. Procédé de télémétrie pour la cartographie bi - ou tri-dimensionnelle d'un volume selon la revendication 8, **caractérisé en ce qu'**il comporte une étape de calcul en temps réel d'une image à partir des points d'acquisition, pour permettre une vérification du processus de pointage.

10. Procédé de télémétrie pour la cartographie bi - ou tri-dimensionnelle d'un volume selon la revendication 8 ou 9 **caractérisé en ce qu'**il comporte une étape additionnelle de pointage de certains points de relèvement plus précis ou de certaines zones de détails fins, tels que frises, reliefs, moulures ou chambranles.

11. Procédé de télémétrie pour la cartographie bi - ou tri-dimensionnelle d'un volume selon la revendication 8 ou 9, **caractérisé en ce qu'**il comporte une étape additionnelle de saisie d'informations provenant d'un autre moyen de mesure.

12. Procédé de télémétrie pour la cartographie bi - ou tri-dimensionnelle d'un volume selon l'une quelconque des revendications précédentes, **caractérisé en ce qu'**il comporte une étape consistant à placer l'équipement fixe dans une partie commune à deux volumes adjacents.

13. Procédé de télémétrie pour la cartographie bi - ou tri-dimensionnelle d'un volume selon l'une quelconque des revendications précédentes, **caractérisé en ce qu'**il comporte une étape consistant à placer dans une partie commune à deux volumes adjacents un marqueur, et à procéder à l'acquisition d'un point au moins de ce marqueur depuis un premier espace pour enregistrer les coordonnées C₁(P_{c}) de ce point par rapport à un référentiel R₁ spécifique dudit premier espace, à enregistrer les coordonnées de ce même point par une acquisition depuis un deuxième espace pour enregistrer les coordonnées C₂(P_{c}) dans le référentiel R₂ et à calculer une matrice de transformation de façon à ce que la transformée de C₁(P_{c}) correspond à C₂(P_{c}), en vue de permettre la fusion de la base B₁ des points acquis dans le premier espace et de la transformation de la base B₂ des points acquis dans le deuxième espace.

14. Procédé de télémétrie pour la cartographie bi - ou tri-dimensionnelle d'un volume selon l'une quelconque des revendications précédentes, **caractérisé en ce qu'**il comporte une étape d'enregistrement d'au moins un élément commun à deux espaces séparés, à enregistrer une première base B₁ de coordonnées des points d'acquisition du premier espace par rapport à un référentiel R₁ spécifique dudit premier espace, cette base B₁ comprenant les coordonnées C₁(P_{c}) dans le référentiel R₁ d'un point commun P_{c} au moins, à enregistrer une deuxième base B₂ de coordonnées des points d'acquisition du deuxième espace par rapport à un référentiel R₂, spécifique dudit deuxième espace, cette base B₂ comprenant les coordonnées C₂(P_{c}) du point commun P_{c} dans le référentiel R₂ et à appliquer à l'une desdites bases une matrice de transformation de façon à ce que la transformée de C₁(P_{c}) correspond à C₂(P_{c})_{'} en vue de permettre la fusion de la base B₁ et de la transformation de la base B₂.

## Patentansprüche

1. Telemetrieausrüstung für die zwei- oder dreidimensionale Kartographie eine Volumens, wobei besagte Ausrüstung einen Fernmesskopf und ein Mittel zur Erfassung der Position besagten Messkopfes in einem festen Bezugssystem enthält. Die Ausrüstung besteht aus einem tragbaren eigenständigen Gerät, das einen Fernmesskopf enthält, und einem feststehenden Gerät, wobei die beiden Geräte die Mittel zur Fernerfassung der Position und Ausrichtung des tragbaren Geräts in besagtem festem Bezugssystem enthalten, **gekennzeichnet dadurch, dass** es mindestens zwei Sensoren umfasst: einen ersten Sensor, der eine Entfernung misst, und einen zweiten Sensor, der mit dem tragbaren Gerät verbunden ist und eine Position und eine Richtung misst, **dadurch gekennzeichnet, dass** das feststehende Gerät die Position des beweglichen Geräts in seinem feststehenden Bezugssystem ermittelt und das bewegliche Gerät die Position eines Punktes im Raum im Verhältnis zu seinem beweglichen Bezugssystem erfasst, und die Ausrüstung diese beiden Informationen auswertet, um die vom beweglichen Gerät gelieferten Daten im festen Bezugssystem zu berechnen. Die Ausrüstung ist ferner **dadurch gekennzeichnet, dass** besagtes bewegliches Gerät mindestens einen Funkfrequenz-Sender enthält und dass die Ausrüstung Mittel zur Lokalisierung besagten Senders in einem festen Bezugssystem enthält.

2. Telemetrieausrüstung für die zwei- oder dreidimensionale Kartographie eines Volumens nach Patentanspruch 1, **dadurch gekennzeichnet, dass** das feststehende Gerät Mittel zur Bestimmung der Koordinaten des beweglichen Geräts in besagtem feststehenden Bezugssystem R_{c} aufweist, sowie eine Datenbank, in der die Datensätze gespeichert sind, die für jede Erfassung aᵢ mindestens die gemessene Entfernung D(aᵢ), die Ausrichtung 0(aᵢ) des beweglichen Geräts zum Zeitpunkt der Erfassung, und die Koordinaten C(aᵢ) des beweglichen Geräts enthalten.

3. Telemetrieausrüstung für die zwei- oder dreidimensionale Kartographie eines Volumens nach Patentanspruch 1 oder 2, **dadurch gekennzeichnet, dass** es einen oder zwei miteinander verbundene Sensoren des feststehenden Bezugssystems R_{c} umfasst, die ein elektrisches Signal in Abhängigkeit von der Position des Bezugssystems des beweglichen Geräts im feststehenden Bezugssystem R_{c} aussenden.

4. Telemetrieausrüstung für die zwei- oder dreidimensionale Kartographie eines Volumens nach Patentanspruch 1, **dadurch gekennzeichnet, dass** der zweite Sensor drei Koordinaten und drei Winkel angibt.

5. Telemetrieausrüstung für die zwei- oder dreidimensionale Kartographie eines Volumens nach Patentanspruch 1, **dadurch gekennzeichnet, dass** ein dritter Sensor, der mit dem feststehenden Gerät verbunden ist, die Entfernung zwischen dem dritten Sensor und dem zweiten Sensor misst, und **dadurch gekennzeichnet, dass** der dritte Sensor Mittel zur Erzeugung eines Alarmsignals im Falle einer Abweichung aufweist.

6. Telemetrieausrüstung für die zwei- oder dreidimensionale Kartographie eines Volumens nach einem der vorhergehenden Patentansprüche, **dadurch gekennzeichnet, dass** der Fernmesskopf einen Laser umfasst, der sichtbare Strahlung aussendet.

7. Telemetrieausrüstung für die zwei- oder dreidimensionale Kartographie eines Volumens nach einem der vorhergehenden Patentansprüche, **dadurch gekennzeichnet, dass** sie einen Speicher mit einer Objektbibliothek umfasst.

8. Telemetrieausrüstung für die zwei- oder dreidimensionale Kartographie eines Volumens, die eine Phase der Fernerfassung der Position und der Ausrichtung eines Laser-Telemeters umfasst, welches ein tragbares Gerät ist, in besagtem feststehenden Bezugssystem, welches ein feststehendes Gerät bildet, **dadurch gekennzeichnet, dass** die Phase der Fernerfassung der Position und der Ausrichtung über eine manuelle Anzielung eines tragbaren Gerätes (1) erfolgt, das insbesondere einen Sensor (3) enthält, der einen sichtbaren Laserstrahl aussendet, und die Entfernung zwischen dem tragbaren Gerät und dem feststehenden Gerät misst, **dadurch gekennzeichnet, dass** das feststehende Gerät die Position des beweglichen Geräts in seinem feststehenden Bezugssystem ermittelt und das bewegliche Gerät die Position eine Punktes im Raum im Verhältnis zu seinem beweglichen Bezugssystem erfasst, und die Ausrüstung diese beiden Informationen auswertet, um die vom beweglichen Gerät gelieferten Daten im feststehenden Bezugssystem zu errechnen.

9. Telemetrieausrüstung für die zwei- oder dreidimensionale Kartographie eines Volumens nach Patentanspruch 8, **dadurch gekennzeichnet, dass** es eine Phase zur Berechnung der Echtzeit eines Bildes mit Hilfe der Erfassungspunkte umfasst, um die Prüfung des Anzielungsprozesses zu ermöglichen.

10. Telemetrieausrüstung für die zwei- oder dreidimensionale Kartographie eines Volumens nach Patentanspruch 8 oder 9, **dadurch gekennzeichnet, dass** es eine zusätzliche Phase der Anzielung bestimmter, genauerer Peilungspunkte oder bestimmter Zonen mit feinen Details wie z.B. Friese, Reliefe, Abdeckleisten oder Umrahmungen umfasst.

11. Telemetrieausrüstung für die zwei- oder dreidimensionale Kartographie eines Volumens nach Patentanspruch 8 order 9, **dadurch gekennzeichnet, dass** es eine zusätzliche Phase der Eingabe von Daten umfasst, die von einem anderen Messmittel stammen.

12. Telemetrieausrüstung für die zwei- oder dreidimensionale Kartographie eines Volumens nach einem der vorhergehenden Patentansprüche, **dadurch gekennzeichnet, dass** es eine Phase umfasst, die darin besteht, das feststehende Gerät in einen gemeinsamen Teil mit zwei aneinander grenzenden Volumen zu positionieren.

13. Telemetrieausrüstung für die zwei- oder dreidimensionale Kartographie eines Volumens nach einem der vorhergehenden Patentansprüche, **dadurch gekennzeichnet, dass** es eine Phase umfasst, die darin besteht, einen Marker in einen gemeinsamen Teil mit zwei aneinander grenzenden Volumen zu positionieren, und mindestens einen Punkt dieses Markers von einem ersten Raum aus zu erfassen, um die Koordinaten C₁ (P_{c}) dieses Punktes im Verhältnis zu einem spezifischen Bezugssystem R₁ dieses ersten Raumes zu speichern, die Koordinaten dieses Punktes durch eine Erfassung von einem zweiten Raum aus zu speichern, um die Koordinaten C₂ (P_{c}) im Bezugssystem R₂ zu speichern, und eine Transformationsmatrix zu berechnen, so dass die Transformierte von C₁ (P_{c}) C₂(P_{c}) entspricht, um die Fusion der Basis B1 der im ersten Raum erfassten Punkte mit der Transformation der Basis B₂ der im zweiten Raum erfassten Punkte zu ermöglichen.

14. Telemetrieausrüstung für die zwei- oder dreidimensionale Kartographie eines Volumens nach einem der vorhergehenden Patentansprüche, **dadurch gekennzeichnet, dass** es eine Phase der Speicherung von mindestens einem, beiden getrennten Räumen gemeinsamem Element umfasst, dass eine erste Koordinaten-Basis B₁ der Erfassungspunkte des ersten Raums im Verhältnis zu einem spezifischen Bezugssystem R₁ des ersten Raums gespeichert wird; wobei diese Basis B1 die Koordinaten C₁(P_{c}) im Bezugssystem R1 von mindestens einem gemeinsamen Punkt P_{c} umfasst, dass eine zweite Koordinaten-Basis B2 der Erfassungspunkte des zweiten Raumes im Verhältnis zu einem spezifischen Bezugssystem R₂ besagten zweiten Raums gespeichert wird, wobei diese Basis B₂ die Koordinaten C₂(P_{c}) des gemeinsamen Punktes P_{c} im Bezugssystem R2 enthält, und dass auf eine dieser Basen eine Transformationsmatrix angewendet wird, so dass die Transformation von C₁(P_{c}) C₂(P_{c}) entspricht, um die Fusion von Basis B₁ mit der Transformation von Basis B₂ zu ermöglichen.

## Claims

1. Telemetry equipment for two- or three-dimensional cartography of a volume, said equipment comprising a telemetry head and a means for acquiring the position of said measurement head in a fixed frame of reference, the equipment consisting of an autonomous portable container comprising a telemetry head and a fixed container, the two containers comprising means for remotely acquiring the position and the orientation of the portable container in said frame of reference, **characterised in that** it comprises at least two sensors, a first sensor measuring a distance, a second sensor, linked to the portable container, measuring a position and a direction, **in that** the fixed container establishes the position of the mobile container in its fixed frame of reference and the mobile container acquires the position of a point in space in relation to its mobile frame of reference, the equipment using these two pieces of information to recalculate the data supplied by the mobile container within the fixed frame of reference, the equipment also being **characterised in that** said mobile container has at least one radio-frequency transmitter and **in that** the equipment comprises means for localising said transmitter within the fixed frame of reference.

2. Telemetry equipment for two- or three-dimensional cartography of a volume according to claim 1, **characterised in that** the fixed container contains means for determining the coordinates of the mobile container within said fixed frame of reference R_{c}, as well as a database in which it stores series of data comprising at least, for each acquisition aᵢ, the distance measured D(aᵢ) , the orientation O(aᵢ) of the mobile container at the time of acquisition, and the coordinates C(aᵢ) of the mobile container.

3. Telemetry equipment for two- or three-dimensional cartography of a volume according to claim 1 or 2, **characterised in that** it comprises one or two sensors attached to the fixed frame of reference R_{c} which deliver an electrical signal that varies according to the position of the frame of reference of the mobile container within the fixed frame of reference R_{c}.

4. Telemetry equipment for two- or three-dimensional cartography of a volume according to claim 1, **characterised in that** the second sensor delivers three coordinates and three angles.

5. Telemetry equipment for two- or three-dimensional cartography of a volume according to claim 1, **characterised in that** a third sensor, linked with the fixed container, measures the distance between the third sensor and the second sensor and **in that** the third sensor comprises means for generating an alarm signal in the event of a drift.

6. Telemetry equipment for two- or three-dimensional cartography of a volume according to any one of the preceding claims, **characterised in that** the telemetry head comprises a laser that emits a visible ray.

7. Telemetry equipment for two- or three-dimensional cartography of a volume according to any one- of the preceding claims, **characterised in that** it comprises a memory that contains a library of objects.

8. Telemetry method for two- or three-dimensional cartography of a volume comprising a step of remote acquisition of the position and orientation of a laser telemeter, forming a portable container, in said fixed frame of reference, forming a fixed container, **characterised in that** the step of remote acquisition of the position and the orientation is carried out by manually pointing a portable tool (1) comprising mainly a sensor (3), which emits a visible laser beam, performing the measurement of the distance between the portable tool and the fixed container, **in that** the fixed container establishes the position of the mobile container within its fixed frame of reference and the mobile container acquires the position of a point in space in relation to its mobile frame of reference, the equipment then using these two pieces of information to recalculate the data supplied by the mobile container in the fixed frame of reference.

9. Telemetry method for two- or three-dimensional cartography of a volume according to claim 8, **characterised in that** it comprises a step of real-time calculation of an image based on the points of acquisition, so as to enable checking of the pointing process.

10. Telemetry method for two- or three-dimensional cartography of a volume according to claim 8 or 9, **characterised in that** it comprises an extra step of checking certain more-accurate projecting points or certain fine detail areas, such as friezes, raised patterns, mouldings and architraves.

11. Telemetry method for two- or three-dimensional cartography of a volume according to claim 8 or 9, **characterised in that** it comprises an additional step of entering information from another measurement system.

12. Telemetry method for two- or three-dimensional cartography of a volume according to any one of the preceding claims, **characterised in that** it comprises a step that consists of placing the fixed equipment in an area that is shared by two adjacent volumes.

13. Telemetry method for two- or three-dimensional cartography of a volume according to any one of the preceding claims, **characterised in that** it comprises a step that consists of placing a marker in an area that is shared by two adjacent volumes, and in proceeding to acquire at least one point of this marker from a first area so as to register the coordinates C₁(P_{c}) of this point in relation to a specific frame of reference R₁ of the first area, in registering the coordinates of this same point by means of acquisition from a second area so as to register the coordinates C₂(P_{c}) in the frame of reference R2 and in calculating a transformation matrix so that the transform of C₁(P_{c}) matches C₂(P_{c}), with a view to enabling the fusion of the base B₁, the points acquired in the first area and the transformation of the base B₂ of the points acquired in the second area.

14. Telemetry method for two- or three-dimensional cartography of a volume according to any one of the preceding claims, **characterised in that** it comprises a step of registering at least one element shared by two separate areas, in registering a first base B₁ of coordinates of acquisition points of a first area in relation to a specific frame of reference R₁ of the first area, this base B₁ comprising at least the coordinates C₁(P_{c}) in the frame of reference R₁ of a shared point P_{c}, in registering a second base B₂ of coordinates of acquisition points of the second area in relation to a specific frame of reference R₂ of the second area, this base B₂ comprising the coordinates C₂(P_{c}) of the shared point P_{c} in the frame of reference R₂, and in applying a transformation matrix to either one of said bases, so that the transform of C₁(P_{c}) matches C₂(P_{c}), with a view to enabling the fusion of the base B₁ and the transformation of the base B₂.
